# EUROPÄISCHE PATENTANMELDUNG

(11) **EP 1 568 971 A1**
(43) Veröffentlichungstag der Anmeldung: **31.08.2005**
(21) Anmeldenummer: 05000195.7
(22) Anmeldetag: 07.01.2005
(51) Int. Cl.: G01D 5/245

(54) **Drehwinkelsensor**

(30) Priorität: 28.02.2004 DE 102004009839
(71) Anmelder: ZF Lenksysteme GmbH, 73527 Schwäbisch Gmünd (DE)
(72) Erfinder: Rössner, Silvester, 73485 Zöbingen (DE)

(57) **Zusammenfassung**

Die Erfindung betrifft einen Drehwinkelsensor insbesondere zur Bestimmung eines Drehmoments in einer tordierbaren Welle eines Lenksystems mit mindestens zwei konzentrisch um eine Drehachse angeordneten magnetischen Maßstäben, wobei die Pollänge mindestens eines der an der Nonienbildung beteiligten Maßstabes vorteilhaft moduliert wird, so dass möglichst wenig Bereiche von Uneindeutigkeit entstehen. Mehrere Ringe können derart angeordnet werden, dass die Uneindeutigkeitsbereiche der gebildeten Nonien sich nicht gegenseitig überlappen.

## Beschreibung

Die Erfindung betrifft einen Drehwinkelsensor, insbesondere zur Bestimmung eines Drehmomentes in einer tordierbaren Welle eines Lenksystems nach dem Oberbegriff des Anspruchs 1.

Drehwinkelsensoren zur Detektion eines Drehwinkels oder Verdrehwinkels einer Welle oder eines Torsionselementes und zur Bestimmung eines Drehmomentes in einer Welle sind mannigfaltig bekannt.

Die DE 102 21 340 A1 beschreibt eine Sensoranordnung zur Detektion des Drehwinkels einer Welle, mit einem, ein Magnetfeld erzeugenden Magnetelement und einem, ein Magnetfeld erfassenden Messelement, wobei das Magnetelement als Magnetring ausgebildet ist, der ein Magnetfeld aufweist, welches bezogen auf die Welle, eine axiale Komponente und eine tangentiale Komponente aufweist. Der Drehwinkel der Welle lässt sich somit durch den jeweiligen Magnetisierungswinkel ermitteln.

Die EP 1 092 956 A1 beschreibt einen elektromagnetischen Drehwinkelsensor zur Erfassung eines Drehwinkels an einer Achse, mit einem um die Achse drehbaren magnetischen Rotor und einem feststehenden Stator, der Mittel zur Erfassung eines auf den Rotor gerichteten Magnetfeldes, sowie wenigstens vier erste und wenigsten vier zweite Magnetdetektoren zur Detektion des Magnetfeldes aufweist. Der Rotor und der Stator liegen sich so gegenüber, dass sich zwischen ihnen ein vom Magnetfeld durchsetzter Luftspalt ausbildet. Die Empfindlichkeiten der ersten und zweiten Magnetdetektoren weisen entlang eines Kreises Werte auf, die in der Abwicklung des Kreises auf einer Geraden jeweils von einer Sinuskurve einhüllbar sind. Als Mittel zur Erzeugung des periodischen Magnetfeldes kommen insbesondere Permanentmagneten und magnetische Spulen in Betracht. Als Magnetdetektoren werden Hallsensoren oder Induktionspulen angewandt.

Die DE 101 10 785 C2 beschreibt einen Lenkwinkelsensor mit einer drehbar gelagerten, den Drehwinkel eines Lenkrades wiedergebenden Codescheibe, mit einer den Code der Codescheibe abtastenden Abtasteinheit zur Bestimmung der Winkelstellung des Lenkrades innerhalb einer Umdrehung, mit einem mit der Lenksäule oder der Codescheibe mechanisch gekoppelten Zähleinheit zur Zählung der vollen Umdrehung des Lenkrades gegenüber einer Nulllage, wobei die Zähleinheit ein Zählrad und die Winkelstellung des Zählrades abtastende Sensoren aufweist. Das Übersetzungsverhältnis der Codescheibe zu dem Zählrad ist kleiner eins und das Zählrad weist unterschiedliche Polungen auf. Zwei in Phasenversatz von 90° zueinander angeordnete Magnetfeldsensoren bestimmen die Winkelstellung des Zählrades.

Die DE 102 10 372 A1 beschreibt einen Drehwinkelsensor, mit einem scheibenförmigen Träger einer ersten Spur von magnetischen Nord- und Südpolen und einer zweiten Spur von magnetischen Nord- und Südpolen mit einer von der ersten Spur abweichenden Anzahl von Nord- und Südpolen und mit je einem Sensorelement zur Detektion der ersten und der zweiten Spur. Mit der ersten Spur wird nach Inbetriebnahme des Drehwinkelsensors eine erste grobe Erfassung des Drehwinkels des Spurträgers durchgeführt und mit der zweiten Spur eine hochaufgelöste Erfassung des Drehwinkels bewirkt. Das sinusförmige Signal des Drehwinkelsensors wird mit einer Winkelfunktion linearisiert.

In der DE 198 18 799 C2 wird ein Drehwinkelsensor mit zwei magnetischen Ringen und drei zugeordneten Sensorelementen beschrieben. Zur Bestimmung eines eindeutigen Winkels innerhalb 360° wird das bekannte Nonius-Verfahren mit einer Kombination aus Hall- und MR- Sensoren verwendet, wobei die Signale des Hall-Sensors zur Bereichs-Unterscheidung verwendet werden.

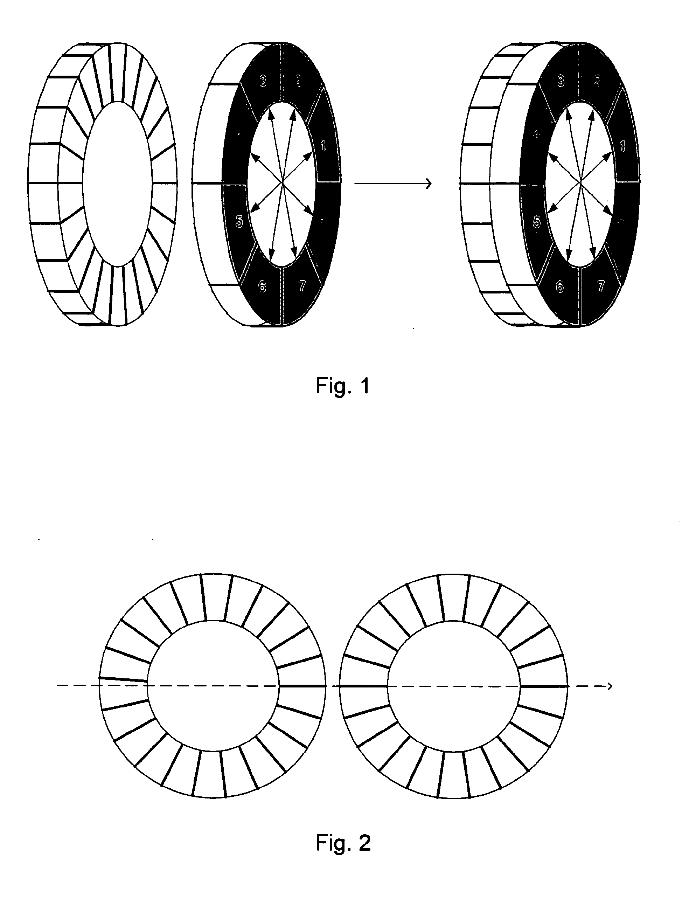

Weiterhin ist aus dem Stand der Technik bekannt, dass in vielen Winkelsensoren sogenannte magnetoresistive Sensorelemente eingesetzt werden. Sensoren dieser Art werden in Sättigung betrieben, um den Winkel des einfallenden Magnetfeldes zu detektieren. Besonders häufig werden hierbei AMR-Sensoren (Anisotropic Magnetoresistance) eingesetzt. Sensorelemente dieser Art können jedoch keine Polung des einwirkenden Magnetfeldes erkennen. Ein Magnetfeldwinkel α verursacht dasselbe Signal am Sensor wie der Winkel α + Π. Damit weisen AMR-Sensoren immer eine gerade Anzahl von Signalperioden auf, beinhalten also implizit den Teiler 2. Baut man beispielsweise ein Noniussystem bestehend aus einem symmetrischen 22-poligen und einem symmetrischen 8-poligen Ring auf, so wiederholen sich die Signale nach 180°. Dieser bekannte Sachverhalt ist zur Erläuterung in Fig. 1 zum Stand der Technik dargestellt. Darin ist zu erkennen, dass in keinem Bereich eine eindeutige Winkelbestimmung möglich ist. Es ist beispielsweise nicht möglich, anhand der Signale des Sensors die Periode 1 von der Periode 5 zu unterscheiden. Dies trifft für alle Perioden auf dem gesamten Umfang zu.

Die bekannten Drehwinkelsensoren bauen entweder komplex, sind in ihrer Funktion hinsichtlich Auflösung, Genauigkeit und Ausfallsicherheit in sicherheitskritischen Anwendungen z.B. im Automobilbau unzureichend. Optische Sensoren haben den Nachteil, dass sie sehr verschmutzungsempfindlich sind.

Der Erfindung liegt die Aufgabe zugrunde, einen Drehwinkelsensor anzugeben, dessen Messgenauigkeit und Betriebssicherheit sehr hoch ist und mit dessen Aufbau eine eindeutige Winkelbestimmung von 360° und darüber hinaus, ermöglicht wird.

Die Aufgabe wird mit den Merkmalen des Anspruchs 1 gelöst.
Darin wird vorgeschlagen, mindestens einen der an der Nonienbildung beteiligten magnetischen Maßstäbe, welche auf einem geeigneten Träger angeordnet sein können, unsymmetrisch zu gestalten. Dies wird erreicht, indem die Pollängen eines oder mehrerer magnetischer Maßstäbe moduliert werden. Wichtig dabei ist, dass der Nonius, also die Anordnung beider Maßstäbe zueinander, moduliert wird.
In Fig. 2 wird beispielsweise die Modulation für einen 22-poligen Maßstab dargestellt. Die Symmetrie lässt sich auf verschiedene Arten brechen. Im Beispiel werden die ersten 11 Pole etwas verkürzt, dafür die nächsten 11 etwas verlängert. Der Symmetriebruch ist anhand der gestrichelten Linie deutlich zu erkennen. Der 8-polige Maßstab behält seine symmetrische Ausführung. Besonders vorteilhaft ist es, weitere Maßstäbe in ähnlicher Art zu modulieren, um damit weitere Nonien zu bilden.

Bildet ein modulierter Maßstab ein Noniussystem mit einem unmodulierten, z.B. einem symmetrischen 8-poligen Maßstab, so entstehen nur noch wenige Bereiche, in denen der gebildete Nonius uneindeutig ist.

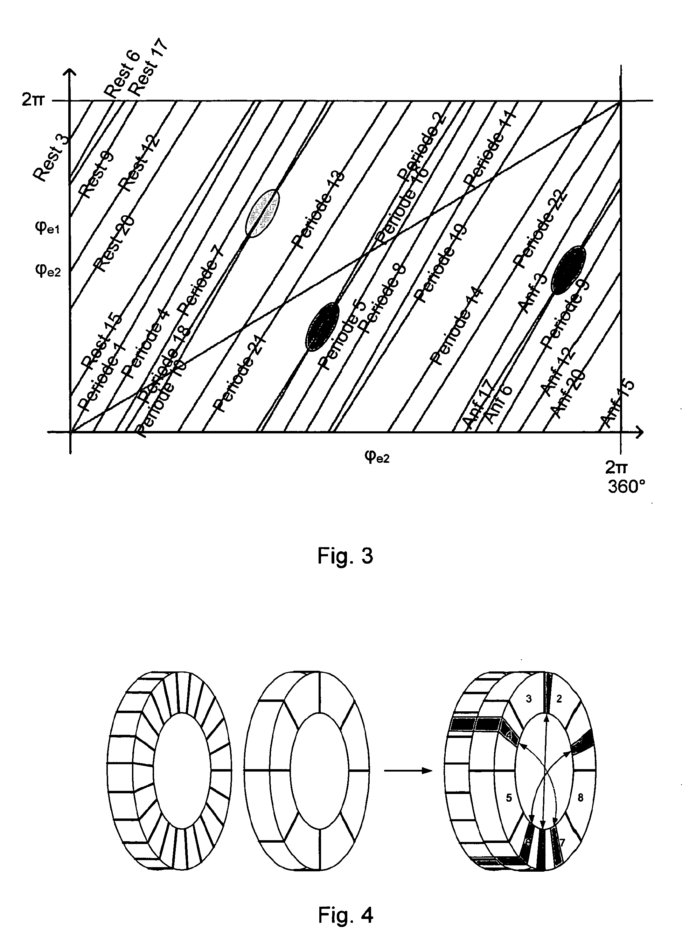

In Fig. 3 sind die entsprechenden zurückgerechneten Winkelwerte aus den zugeordneten Sensorelementen dargestellt. Auf der Ordinatenachse ist der entsprechende Winkelwert ϕₑ₁ des zugeordneten 22-poligen Maßstabes aufgetragen und auf der Abszisse alle mehrfach überstrichenen Winkelwerte ϕₑ₂ des 8-poligen Maßstabes. Eine eindeutige Winkelbestimmung ist an den Schnittpunkten der Geraden nicht durchführbar.
Folgende Stellen können nicht unterschieden werden:
Periode 1 u. 6 des 8-pol. Maßstabes bzw. 2 u. 16 des 22-pol. Maßstabes.
Periode 2 u. 6 des 8-pol. Maßstabes bzw. 6 u. 17 des 22-pol. Maßstabes.
Periode 4 u. 7 des 8-pol. Maßstabes bzw. 10 u. 18 des 22-pol. Maßstabes.

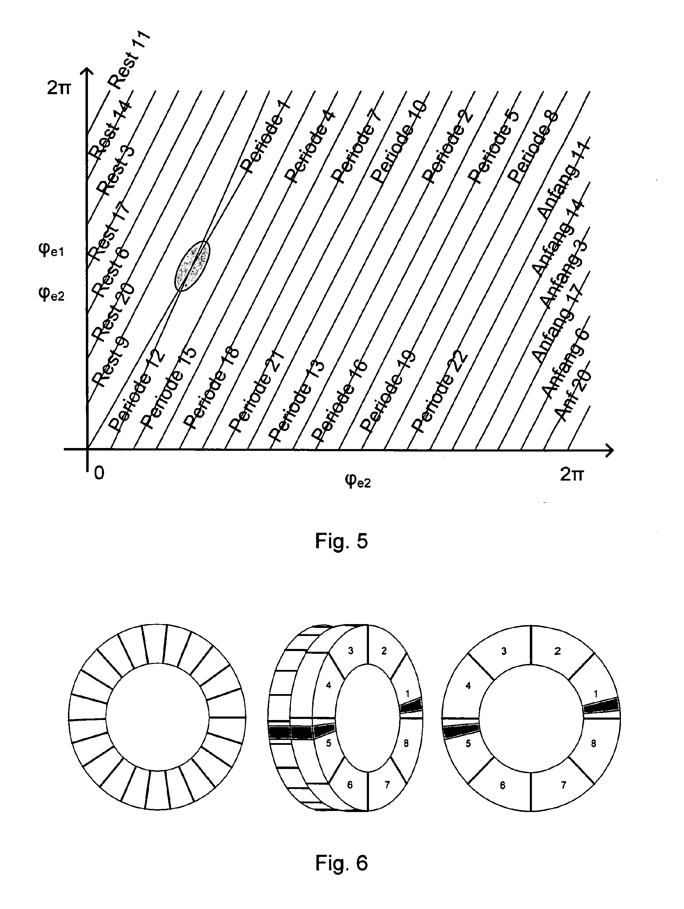

Fig. 4 zeigt beide, einen Nonius bildende Maßstäbe. Die Bereiche der Uneindeutigkeit sind durch die Doppelpfeile dargestellt.
Als besonders vorteilhaft wird angesehen, die Schnittpunkte der Geraden des entstehenden Noniussystems auf die Anzahl eins zu begrenzen. Der entsprechende Winkelverlauf ist in Fig. 5 dargestellt. Diese Konstellation wurde erreicht, indem der Pol bei 0° um 12,5% größer und der Pol bei 180° um 12,5% kleiner als die verbleibenden Pole desselben Maßstabes gewählt wurden. Fig. 6 zeigt beide Maßstäbe mit den hieraus resultierenden Bereichen der Uneindeutigkeit des Nonius.

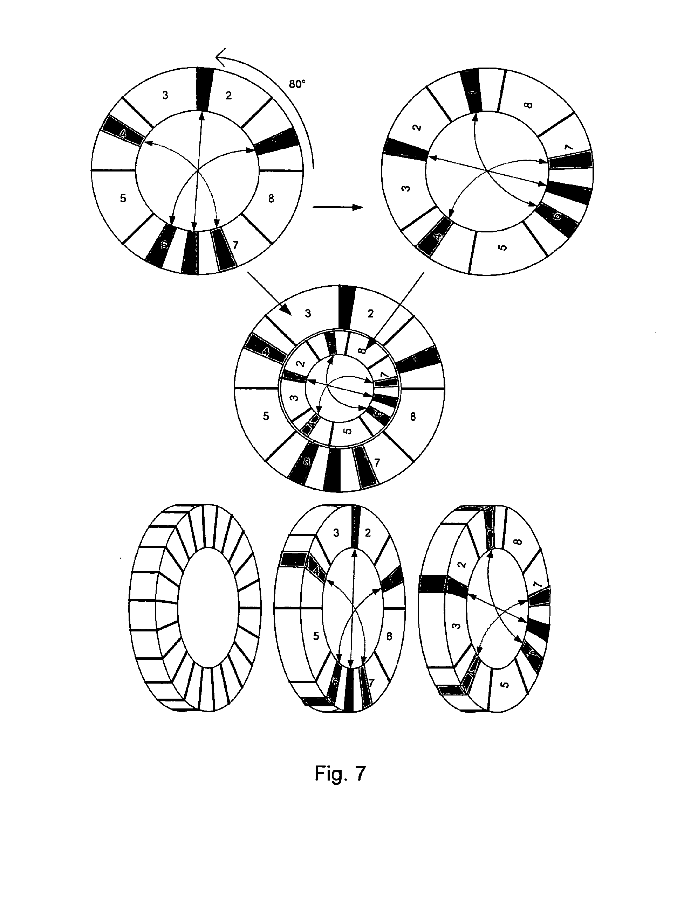

Als besonders vorteilhafte Weiterentwicklung der Erfindung wird nachfolgend beschriebene Anordnung angesehen:
Durch die geeignete Kombination mindestens zweier, mit Uneindeutigkeitsbereichen behafteter Nonien kann die Eindeutigkeit wieder auf den vollen Umfang erweitert werden. Wie im Ausführungsbeispiel in Fig. 7 dargestellt ist, wird ein unmodulierter 22-poliger Maßstab und zwei gleichförmig modulierte, 8-polige Maßstäbe zur Bildung von zwei uneindeutigen Nonien eingesetzt. Einer der beiden modulierten Maßstäbe wird um 80° rotiert zum ersten modulierten Maßstab angeordnet. Es können wieder zwei Nonien mit eigenen Uneindeutigkeitsbereichen gebildet werden. Dabei muss darauf geachtet werden, dass an jeder Winkelposition der Anordnung mindestens einer der beiden Nonien in seinem eindeutigen Bereich ist. Anhand der Signale der den magnetischen Maßstäben zugeordneten Sensorelemente kann daraufhin eine entsprechende Auswertung vorgenommen werden.

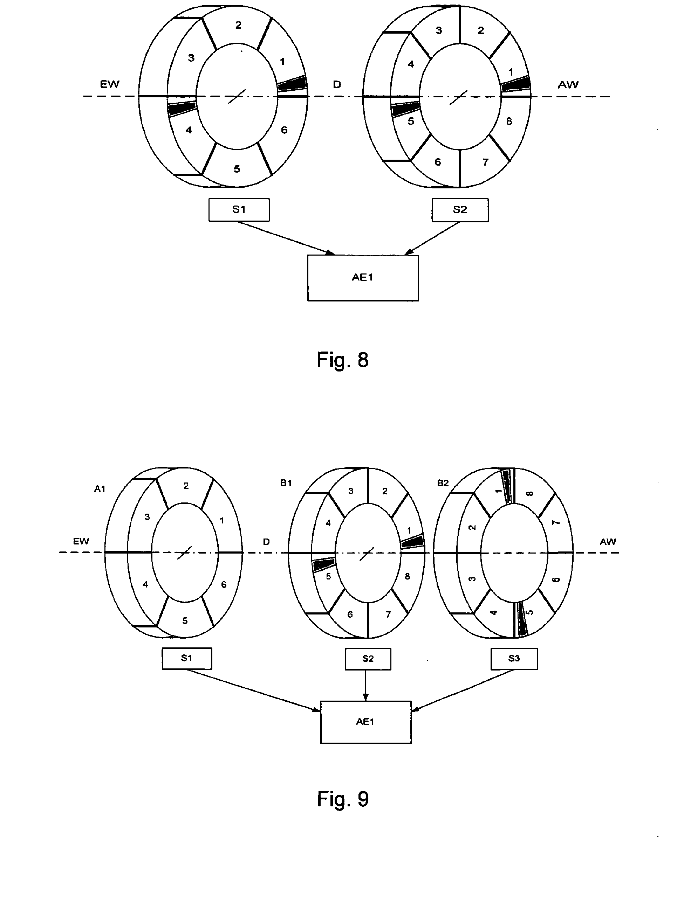

Weitere Ausführungsformen ergeben sich aus den Unteransprüchen und werden an dieser Stelle kurz beschrieben.
Als besonders einfache Ausführung wird ein Winkelsensor nach Fig. 8 vorgeschlagen, welcher zwei Maßstäbe aufweist, die zusammen einen Nonius bilden. Den Maßstäben ist jeweils ein Sensorelement zugeordnet. Jedes Sensorelement ist mit einer Auswerteeinheit verbunden. Die Maßstäbe können auch fest miteinander verbunden sein, etwa auf einem gemeinsamen Träger oder auf einer Welle. Ein Winkelsensor dieser Bauart ist, abgesehen von den Bereichen der Uneindeutigkeit, sofort nach dem Einschalten in der Lage, ein eindeutiges Winkelsignal innerhalb einer vollen Umdrehung zur Verfügung zu stellen.

Die Bereiche der Uneindeutigkeit können zudem noch dynamisch verkleinert werden indem minimale Bewegungen des Sensors ausgenutzt werden. Durch eine Steigungsermittlung aus den Geraden der Winkelinformation ist zu erkennen, in welchem Winkelbereich sich das System gerade befindet. Typischerweise würden hierfür Bewegungen der Lenkhandhabe im Bereich von 0,1° genügen, um eine Differenzmessung zur Steigungserkennung durchzuführen. Im praktischen Betrieb in einem Lenksystem wird der Winkel ohnehin laufend nachgeführt. Bereiche der Uneindeutigkeit haben dann keine Auswirkung mehr, wirken also nicht mehr einschränkend.
Alternativ kann der Sensor mit einer Spannung versorgt werden, welche nicht unterbrochen wird, so dass er seine Position nie verliert. Der Nonius ist im Allgemeinen nur zur Initialisierung nach dem Einschalten notwendig. Danach ist durch entsprechende Signalverarbeitung durch einen Zähler in der Auswerteeinheit oder in einem übergeordneten System sogar eine Erweiterung des eindeutigen Winkelbereiches auf das Vielfache von 360° möglich.

In einer weiteren vorteilhaften Ausführung wird ein Drehmomentsensor vorgeschlagen, bei dem zwei Maßstäbe auf einer Eingangswelle und einer Ausgangswelle festgelegt sind. Zwischen diesen befindet sich der Drehstab oder ein sonstiges tordierbares Element, dessen einwirkendes Drehmoment anhand einer Winkeldifferenz zwischen Eingangs- und Ausgangswelle und der Steifigkeit des tordierbaren Elements bestimmt wird. Ist der Winkelversatz der Wellen kleiner als ein bestimmter Grenzwinkel so kann für jede der beiden Wellen der Drehwinkel eindeutig auf 360° bis auf die Bereiche der Uneindeutigkeit bestimmt werden. Führt man auch hier den Winkel nach, so haben die Bereiche der Uneindeutigkeit keine Auswirkung mehr.

Als weitere vorteilhafte Ausführung nach Fig. 9 wird vorgeschlagen, einen Drehmomentsensor aufzubauen, indem man einen dritten, versetzten Maßstab auf der Eingangs- EW oder Ausgangswelle AW festlegt. Die tordierbare Welle D befindet sich zwischen dem ersten Maßstab A1 und dem zweiten und dritten Maßstab B1, B2. Den Maßstäben werden Sensorelemente S1, S2, S3 zugeordnet, welche mit einer Auswerteeinheit AE1 verbunden sind. Die Bereiche der gebildeten uneindeutigen Noniensysteme aus dem ersten Maßstab A1 in Verbindung mit dem zweiten Maßstab B1 und dem ersten in Verbindung mit dem dritten Maßstab B2 dürfen sich dabei nicht überlappen. Nach dem Einschalten ist es sofort möglich, eine eindeutige Winkelbestimmung der Eingangs- und Ausgangswelle durchzuführen und das anliegende Drehmoment daraus zu berechnen.

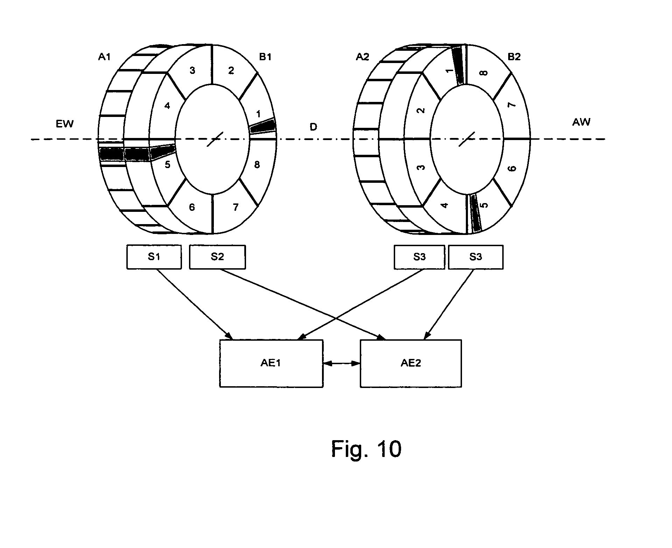

In einer weiteren besonders vorteilhaften Ausführung werden insgesamt vier Maßstäbe A1, B1, A2, B2 und vier zugeordnete Sensorelemente S1, S2, S3, S4 eingesetzt. Jedes der Sensorelemente ist mit einer Auswerteeinheit AE1 oder AE2 verbunden. Die Auswerteeinheiten sind in der Lage, miteinander zu kommunizieren. In dieser Ausführungsform, wie in Fig. 10 gezeigt, werden zwei fein auflösende und zwei grob auflösende Maßstäbe verwendet, welche paarweise wiederum einen uneindeutigen Nonius bilden. Dabei sind zwei Maßstäbe A1, B1 auf einer Eingangswelle EW und zwei Maßstäbe A2, B2 auf einer Ausgangswelle AW festgelegt. Dazwischen befindet sich die tordierbare Welle, z.B. ein Drehstab einer Hilfskraftlenkung. Durch die Verbindung der Sensorelemente mit den untereinander kommunizierenden Auswerteeinheiten wird der Sensor redundant. Fällt im Betrieb ein Teilsensor aus, so kann dies durch das übergeordnete System erkannt werden und das Lenksystem in einen sicheren Zustand überführt werden.

## Patentansprüche

1. Drehwinkelsensor, insbesondere zur Bestimmung eines Drehmomentes in einem tordierbaren Wellenelement eines Lenksystems, mit folgenden Merkmalen:
a) mindestens zwei konzentrisch um eine Drehachse angeordnete Maßstäbe (A1, B1), wobei
b) der Maßstab (A1) und der Maßstab (B1) aufeinanderfolgende magnetische Nord- und Südpole aufweisen,
c) der Maßstab (A1) eine vom Maßstab (B1) unterschiedliche Anzahl von Polpaaren aufweist,
d) die Polpaaranzahl des Maßstab (A1) und die Polpaaranzahl des Maßstabs (B1) teilerfremd sind und
e) jedem der Maßstäbe (A1, B1) mindestens ein Sensorelement zugeordnet ist,
**gekennzeichnet dadurch, dass**
f) mindestens ein Pol auf mindestens einem der Maßstäbe (A1, B1) eine andere Länge aufweist als die verbleibenden Pole desselben Maßstabs und
g) mindestens zwei der Maßstäbe (A1, B1) in Kombination einen teilweise uneindeutigen Nonius (N1) bilden.

2. Drehwinkelsensor nach Anspruch 1, **dadurch gekennzeichnet, dass** mindestens ein weiterer Maßstab mindestens einen weiteren uneindeutigen Nonius (N2) bildet und diese Nonien in Kombination zueinander die Uneindeutigkeiten auflösen.

3. Drehwinkelsensor nach Anspruch 1, **dadurch gekennzeichnet, dass** ein erster Maßstab (A1) und ein zweiter Maßstab (B1) einen gemeinsamen teilweise uneindeutigen Nonius bilden und mindestens zwei der zugeordneten Sensorelemente (S1, S2) mit einer Auswerteinheit verbunden sind.

4. Drehwinkelsensor nach Anspruch 3, **dadurch gekennzeichnet, dass** die Maßstäbe (A1, B1) in fester Wirkverbindung zueinander stehen.

5. Drehwinkelsensor nach Anspruch 3, **dadurch gekennzeichnet, dass** sich zwischen dem Maßstab (A1) und dem Maßstab (B1) ein tordierbares Wellenelement befindet.

6. Drehwinkelsensor nach Anspruch 2, **dadurch gekennzeichnet, dass** ein Maßstab (A1) und mindestens zwei Maßstäbe (B1, B2) einen ersten teilweise uneindeutigen Nonius (N1) aus Maßstab (A1) und Maßstab (B1) bildet und mindestens ein weiterer Nonius (N2) aus Maßstab (A1) und Maßstab (B2) gebildet wird, wobei Maßstab (B1) und Maßstab (B2) so angeordnet sind, dass sich die uneindeutigen Bereiche der jeweiligen Nonien (N1, N2) gegenseitig nicht überschneiden.

7. Drehwinkelsensor nach Anspruch 6, **dadurch gekennzeichnet, dass** die zugeordneten Sensorelemente (S1, S2, S3) mit mindestens einer Auswerteeinheit (AE1) verbunden sind.

8. Drehwinkelsensor nach Anspruch 6, **dadurch gekennzeichnet, dass** sich zwischen dem Maßstab (A1) und den beiden Maßstäben (B1, B2) ein tordierbares Wellenelement befindet, wobei Maßstab (B1) mit Maßstab (B2) in fester Wirkverbindung zueinander stehen.

9. Drehwinkelsensor nach Anspruch 2, **gekennzeichnet dadurch, dass** zwei Maßstäbe (A1, A2) und zwei Maßstäbe (B1, B2) einen ersten uneindeutigen Nonius (N1) aus Maßstab (A1) in Kombination mit dem Maßstab (B1) und einen zweiten uneindeutigen Nonius (N2) aus Maßstab (A2) in Kombination mit dem Maßstab (B2) bilden und dabei die Uneindeutigkeitsbereiche der Nonien (N1, N2) sich gegenseitig nicht überschneiden.

10. Drehwinkelsensor nach Anspruch 9, wobei jedes den Maßstäben (A1, B1, A2, B2) zugeordnete Sensorelement (S1, S2, S3, S4) mit mindestens einer Auswerteeinheit (AE1) verbunden ist.

11. Drehwinkelsensor nach Anspruch 10, **dadurch gekennzeichnet, dass** die Maßstäbe (A1, B1) auf einer Eingangswelle (EW) und die Maßstäbe (A2, B2) auf einer Ausgangswelle (AW) in fester Wirkverbindung zueinander angeordnet sind und sich zwischen Eingans- und Ausgangswelle kein oder ein tordierbares Wellenelement befindet.

12. Drehwinkelsensor nach Anspruch 11, **gekennzeichnet dadurch, dass** eine zweite Auswerteeinheit (AE2) vorgesehen ist, welche mit der ersten Auswerteeinheit (AE1) informationsübertragend verbunden sein kann.

13. Verfahren nach den Ansprüchen 7, 10 und 12, bei dem ein Drehmoment mittels einer Funktion berechnet wird, welche mindestens zwei Winkel oder einen Differenzwinkel und eine Konstante, welche die Steifigkeit einer tordierbaren Welle, repräsentiert, als Eingangsgrößen erhält.
